# EUROPEAN PATENT APPLICATION

(11) **EP 3 196 822 A1**
(43) Date of publication of application: **26.07.2017**
(21) Application number: 15841846.7
(22) Date of filing: 31.07.2015
(51) Int. Cl.: G06Q 30/02, G06Q 30/06

(54) **ONLINE MARKET SERVICE APPARATUS AND METHOD**

(30) Priority: 16.09.2014 KR 20140122682
(71) Applicant: Kang, Chan Go, Gwanak-gu, Seoul 151-844 (KR)
(72) Inventor: Kang, Chan Go, Gwanak-gu, Seoul 151-844 (KR)
(74) Representative: Monzón de la Flor, Luis Miguel
(86) International application number: PCT/KR2015/008021
(87) International publication number: WO 2016/043429

(57) **Abstract**

The present specification discloses an apparatus for providing an online market service, in which a price negotiation game for obtaining a price discount coupon is executed with a purchaser terminal, and a method thereof The object of the price negotiation game is to sequentially decrease a point from a starting point and match the point to a specific point or include the point in a specific point range. The apparatus for providing an online market service according to the present specification may provide the price discount coupon when the game is determined as a success. In this case, a product may be purchased at a discounted price by using the coupon through the selection of a purchaser. The purchaser may reattempt the game when succeeding in the game, so that the purchaser may obtain a coupon having a higher price discount rate.

## Description

### Technical Field

The present specification relates to an apparatus for an online market service and a method thereof, and more particularly, to an apparatus for an online market service, in which a product is sold and purchased online through a communication network and advertisement is provided through the product, and a method thereof.

This application claims priority based on Korean Patent Application No. 10-2014-0122682 applied on Sept. 16, 2015, and all contents disclosed in the disclosure and the drawing of the application are used in this application.

### Background Art

Due to the development of information and communication technologies, the online market, in which a product is purchased by a purchaser connecting to a server when the product is registered on the server, has been growing explosively.

For a related art regarding the online market, there is Korean Unexamined Patent Publication No. 10-2007-0075363 (Jul. 18, 2007). According to the related art, after the purchaser searches for information regarding a specific product, information regarding product information, price, etc. is exchanged in real-time. In this case, after the information is exchanged, when the purchaser intends to purchase the product, the purchaser proposes a purchasing condition (purchase amount, purchase date, delivery method, payment method, etc.) and requests to negotiate the price, and the seller determines the negotiation price by taking the purchase condition, purchaser level information, etc. into consideration.

However, in the related art, only the price negotiation between the purchaser and the seller is disclosed, and a scheme for the purchaser to deal when the seller does not respond to the price negotiation request is not disclosed. Therefore, various methods for the purchaser to receive price discounts even without the purchaser in the online market are required.

### Disclosure

### Technical Problem

A technological object of the present specification is to provide an apparatus for providing an online market service, in which a product is sold and purchased online through a communication network, advertisement is provided through the product and a product price can be negotiated, and a method thereof.

### Technical Solution

To achieve the technological object of the present specification, an apparatus for providing an online market service may include: a communication unit connected to a communication network to transceive data; a memory unit to store product information received from a seller terminal through the communication unit; and a controller to execute a price negotiation game for obtaining a coupon (hereinafter, 'price discount coupon'), which is used for discounting a price of a product, with a purchaser terminal when a price discount request signal with respect to the product stored in the memory unit is received from the seller terminal through the communication unit.

According to the present specification, the controller may set a product selling price included in the product information as a game starting point, provide a game success criteria point or a game success criteria point range associated with the product selling price to the purchaser terminal, provide a point (hereinafter, 'game execution point') sequentially decreased from the game starting point to the purchaser terminal whenever the game execution signal is received from the purchaser terminal, and determine the price negotiation game as a success when the game execution point is the same as the game success criteria point or the game execution point is within the game success criteria point range.

According to an embodiment of the present specification, the controller may randomly select the game success criteria point of the game success criteria point range within a predetermined range based on the product selling price.

According to an embodiment of the present specification, the controller may randomly select a subtraction point within a preset range based on the product selling price whenever the game execution signal is received from the purchaser terminal, calculate the game execution point by subtracting the subtraction point from the game starting point or a previous game execution point, and provide the calculated game execution point to the purchaser terminal.

According to another embodiment of the present specification, the controller may select two or more subtraction points within a preset range based on the product selling price whenever the game execution signal is received from the purchaser terminal,
randomly or sequentially display the two or more subtraction points on a screen of the purchaser terminal by a preset speed, calculate the game execution point by subtracting the subtraction point displayed on the purchaser terminal from the game starting point or a previous game execution point when a selection signal is received from the purchaser terminal, and provide the calculated game execution point to the purchaser terminal.

According to the present specification, when the price negotiation game is determined to be a success, the controller may provide a discount coupon of a preset price discount amount to the purchaser terminal by a selection signal received from the purchaser terminal or repeats execution of the price negotiation game with the purchaser terminal for obtaining the price discount coupon having a price discount amount more than the preset price amount of the price discount coupon.

According to an embodiment of the present specification, when the price negotiation game is executed again by the selection signal received from the purchaser terminal, the controller may execute the price negotiation game with the purchaser terminal after a preset standby time.

According to another embodiment of the present specification, when the price negotiation game is executed again by the selection signal received from the purchaser terminal, the controller may provide a preset advertisement to the purchaser terminal, and executes the price negotiation game with the purchaser terminal after the advertisement is completely viewed.

According to yet another embodiment of the present specification, when the price negotiation game is repeated by the selection signal received from the purchaser terminal, the controller may execute the price negotiation game with the purchaser terminal by a preset item using signal received from the purchaser terminal without a standby time.

Otherwise, when the game execution point is smaller than the game success criteria point or smaller than a lower limit point of the game success criteria point range, the controller may determine the price negotiation game as a failure.

Meanwhile, the price negotiation game may be a stepwise game for providing the price discount coupon, in which a discount rate is increased for each success In this case, when a price discount request signal with respect to the product stored in the memory unit is received from the purchaser terminal through the communication unit, the controller may provide discount rate information of the price discount coupon provided in each step.

According to an embodiment of the present specification, when a price discount request signal with respect to the product stored in the memory unit is received from the purchaser terminal through the communication unit, the controller may set a product selling price included in the product information as a game starting point and provide a game success criteria point of each step or a game success criteria point range of each step associated with the product selling price to the purchaser terminal.

According to another embodiment of the present specification, when the price discount request signal with respect to the product stored in the memory unit is received from the purchaser terminal through the communication unit, the controller may provide a preset advertisement to the purchaser terminal, and execute the price negotiation game with the purchaser terminal after the advertisement is completely viewed.

According to yet another embodiment of the present specification, when a preset item using signal is received from the purchaser terminal, the controller may execute the price negotiation game with the purchaser terminal.

Meanwhile, the memory unit may further store a starting time of the price negotiation game with respect to the product. In this case, the controller may execute the price negotiation game with the purchaser terminal, which received the price discount request signal, after the starting time.

In addition, the memory unit may further store a termination time of the price negotiation game with respect to the product. In this case, the controller may execute the price negotiation game with the purchaser terminal, which received the price discount request signal, until the termination time.

Meanwhile, when the price negotiation game is executed with two or more purchaser terminals, the controller may sell the product to the purchaser terminal, which succeeds in the price negotiation game and transmits the price discount coupon first among the two or more purchaser terminals.

Further, the product information stored in the memory unit may further include information regarding a number amount of the product. In this case, when entire number amount of the products are sold, the controller may end the execution of the price negotiation game.

Meanwhile, when a purchasing signal for purchasing the product stored in the memory unit is received from an advertiser terminal, the controller may set the product purchased by the advertiser terminal as a target product for the product negotiation game.

To achieve the technological object of the present specification, a method for providing an online market service may include: (a) storing product information received from a seller terminal through a communication unit, which is connected to a communication network and transceives data; (b) receiving a price discount request signal with respect to a stored product from a purchaser terminal through the communication unit; and (c) executing a price negotiation game for obtaining a coupon, which is used for discounting a price of the product, with the purchaser terminal.

### Advantageous Effects

According to an aspect of the present specification, the benefit of a price discount can be provided to a purchaser. In addition, a seller can stimulate purchasing desires to more persons through providing the benefit of the price discount.

According to another aspect of the present specification, an advertiser, who wants to provide advertisement, can generate profits through a structure, in which the advertisement is required to be viewed to execute a price negotiation game. In addition, the advertiser can secure various methods for exposing the advertisement of the advertiser, thereby maximizing the advertisement effect.

According to another aspect of the present specification, the seller can select the sales method through a specified price sales scheme or a price negotiation game when registering the product, so the sales channel can be configured in a variety of ways. In addition, products registered by other persons can be sold on the exclusive shopping mall of the seller, so sellers without an initial product can also configure the shopping mall.

According to yet another aspect of the present specification, by integrating the offline price negotiation scheme with an online scheme, the online market can become more active through inducing the price negotiation game to the purchaser.

### Description of Drawings

FIG. 1 is a conceptual view schematically showing a communication environment in which an apparatus for providing an online market service according the present specification may be used.
FIG. 2 is a block diagram schematically showing a configuration of the apparatus for providing an online market according to the present specification.
FIG. 3 is a flow chart schematically showing a method of providing an online market service according to the present specification.

### Best Mode

Hereinafter, embodiments of the present specification is described in detail with reference to the accompanying drawings, and when assigning reference numbers to each element of the drawings, similar or identical elements will be assigned same reference numbers, if possible, even when the elements are displayed in a different drawing, and repetitive description will be omitted. The word "unit" used for elements in the description below is assigned or used only considering the convenience of writing the present specification, and does not have any mutually distinguishing meaning or role by itself. In addition, when describing embodiments of the present specification, detailed descriptions of well-known functions and structures incorporated herein may be omitted when they make the subject matter of the present specification unclear. In addition, while the present specification has been particularly shown and described by embodiments with reference to the accompanied drawings, it should not be interpreted in any way to limit the scope of the present specification. Therefore, the scope of the present specification is not limited to the accompanying drawings, but the scope of the present specification is only defined by within the scope of the accompanying claims, and all various substitutions, changes in form and alterations derived from the meaning, scope and equivalents are within the scope of the present specification.

Terms used in the present specification only have the object of disclosing specific embodiments and it should not be interpreted in any way to limit the scope of the present specification. Singular terms "a", "an" and "the" used in the present specification include plural meanings unless otherwise indicated. Terms such as "include" and/or "including", when used in the present specification, specify specific characteristics, integers, steps, operations, elements and/or existence of components, and does not exclude the existence or addition of one or more other characteristics, integers, operations, elements, components and/or groups thereof.

In the present specification, terms such as "include" or "have" are for specifying characteristics, numbers, steps, operations, elements, components or combinations thereof, and do not exclude in advance the possibility of the existence and addition of one or more other characteristics, numbers, steps, operations, elements, components or combinations thereof.

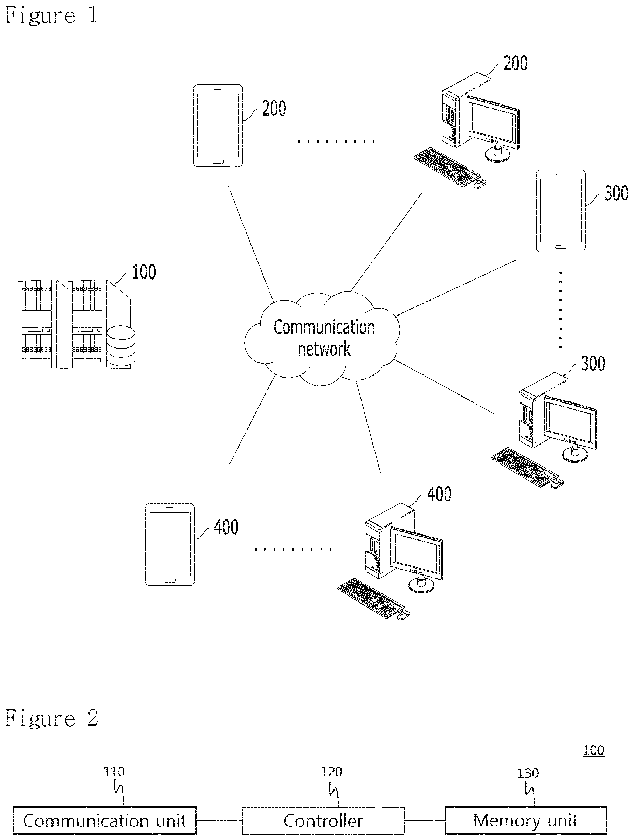

FIG. 1 is a conceptual view schematically showing a communication environment in which an apparatus 100 for providing an online market service according the present specification may be used.

Referring to FIG. 1, an apparatus 100 for providing an online market service may be connected to a seller terminal 200, a purchaser terminal 300 and an advertiser terminal 400 through a communication network. Therefore, in the apparatus 100 for providing an online market service, the seller terminal 200, the purchaser terminal 300 and the advertiser terminal 400 may transceive data with each other. The seller terminal 200 is an information communication terminal of a user desiring to sell a product on the online market. The purchaser terminal 300 is an information communication terminal of a user desiring to sell a product on the online market. The advertiser terminal 400 is an information communication terminal of a user desiring to advertise a product or a service of the advertiser by providing an advertisement on the online market.

The seller terminal 200, the purchaser terminal 300 and the advertiser terminal 400 may be provided by a terminal, which includes a memory unit and a microprocessor to provide computational ability, such as a laptop computer, a workstation, a palmtop computer, a UMPC (Ultra Mobile Personal Computer), a tablet PC, a PDA (Personal Digital Assistant), a Web pad, a mobile phone, a smartphone, a TV, etc.

The communication network 500 may include a data communication network including a local area network (LAN), a metropolitan area network (MAN), a wide area network (WAN), Internet, etc. and also a telephone network, and any communication scheme may be used regardless of wired or wireless communication.

FIG. 2 is a block diagram schematically showing a configuration of the apparatus 100 for providing an online market according to the present specification.

Referring to FIG. 2, the apparatus 100 for providing an online market service may include a communication unit 100, a memory unit 130 and a controller 120.

The communication unit 110 may be connected to the communication network 500 to transceive data. Therefore, the communication unit 110 performs the function of transceiving data for operating the apparatus 100 for providing an online market service according to the present specification. For example, the communication unit 110 may receive product information and the like from the seller terminal 200 and transmit product information and the like to the advertiser terminal 400 or the purchaser terminal 300.

The memory unit 130 may store programs and data required for operating the apparatus 100 for providing an online market service according to the present specification. In addition, the memory unit 130 may store the product information received from the seller terminal 200 through the communication unit 110. The product information signifies product name, selling price, sellable amount, sales period, delivery method, payment method, etc.

The memory unit 130 may be inside or outside of the controller, and may be connected to the controller by various well known schemes. The memory unit 130 may be a well-known semiconductor device, in which data is recorded and deleted, such as RAM, ROM, EEPROM, etc. or a mass storage medium such as a hard disk drive, and is a general term signifying a device for storing information regardless of the device type, so the memory unit does not signify a specific memory device.

The controller 120 may control the overall operation of the apparatus 100 for providing an online market service according to the present specification. In other words, the controller 120 may execute the operation for providing an online market service such as user registration of the seller, the purchaser, the advertiser, etc., user information management, storage space allocation operation, product registration/sales related operation, etc. In addition, when a price discount request signal with respect to the product stored in the memory unit 130 is received from the purchaser terminal 300 through the communication unit 110, the controller 120 may execute a price negotiation game for obtaining a coupon (hereinafter, 'price discount coupon') for discounting the price of the product with the purchaser terminal. The price negotiation game and a control process for providing a price discount coupon according to the present specification will be described in detail below.

When a product registration request is received from the purchaser terminal 200 through the communication unit 110, the controller 120 stores the product information in the memory unit 130 based on the product registration request information. Meanwhile, in the case of a typical online market, the product is registered by a specified price sales scheme in the method of registering the product. The specified price sales scheme signifies a scheme in which the purchaser registering the product specifies the selling price of the product. Other than the specified price sales scheme, a group purchase sales scheme may be used. The group purchase sales scheme signifies a sales scheme in which the purchaser registering the product specifies different selling prices in predetermined quantity units. The group purchase sales scheme is a sales scheme, in which the selling prices of the products are set differently based on the sales quantity, for example, if the specified selling price of product A is 10,000 won, the selling price is set to 9,000 won when 10 or more persons purchase the product, the selling price is set to 8,000 won when 50 or more persons purchase the product, etc. Meanwhile, in the apparatus 100 for providing an online market service according to the present specification, the product may be registered by the price negotiation game sales scheme. The price negotiation game sales scheme signifies a sales scheme, in which the price negotiation game for obtaining the price discount coupon is executed with the purchaser terminal 300, and when the purchaser terminal 300 succeeds in the game, the price discount coupon is provided to the purchaser terminal 300.

According to an embodiment of the present specification, the price negotiation game sales scheme may be set by the seller terminal 200. In other words, when the seller registers the product, which the seller desires to sell, a direct sales scheme may be selected. The controller 120 may set the product sales scheme stored in the memory unit 130 to the price negotiation game sales scheme by a signal received from the seller terminal 200.

According to another embodiment of the present specification, the price negotiation game sales scheme may be set by the advertiser terminal 400. The advertiser terminal 400 may purchase the product registered by the seller terminal 200. In addition, the advertiser terminal 400 may set the purchased product again to the price negotiation game sales scheme. In other words, even when the advertiser does not directly register the product of the advertiser, the advertiser may sell through the price negotiation game sales scheme by using the product registered in the online market. When the controller 120 receives a purchase signal for purchasing the product stored in the memory unit 130 from the advertiser terminal 400, the advertiser terminal 400 may set the product purchased by the advertiser terminal 400 as the target product of the price negotiation game.

The object of the price negotiation game is to sequentially decrease a point from a starting point and match the point to a specific point or include the point in a specific point range. Hereinafter, the execution scheme of the price negotiation game according to an embodiment of the present specification will be described in detail.

When the controller 120 receives the price discount request signal from the purchaser terminal 300, the product selling price included in the product information may be set as a game starting point. For example, when the selling price of product A is 10,000 won, the game starting point may be set as 10,000 points. Meanwhile, although the game starting point may be set in a variety of ways such as point (pt), won (KRW), dollar (USD), etc., in the present specification, the game starting point will be expressed as point (pt) to easily distinguish from won (KRW), which is the unit of the product price.

In addition, the controller 120 may provide the game success criteria point or the game success criteria point range associated with the product selling price to the purchaser terminal 300. The game success criteria point or the game success criteria point range is the criteria for determining whether the game is a success.

According to an embodiment of the present specification, the game success criteria point of the game success criteria point range may be randomly selected within a preset range based on the product selling price. For example, when the selling price of product A is 10,000, a range of 3,000 won (30% of the product price) to 7,000 won (70% of the product price) may be preset. The range may be set by the seller terminal 200, the advertiser terminal 400, or the controller 120. The controller 120 may randomly select the game success criteria point or the game success criteria point range within the range of 3,000 won (30% of the product price) to 7,000 won (70% of the product price). In the present specification, for the convenience of understanding, an example, in which the game success criteria point is set to 5,000 points and the game success criteria point range is set to 4,500 points to 5,500 points, will be used for description.

Every time the controller 120 receives a game execution signal from the purchaser terminal 300, the point (hereinafter, game execution point) gradually decreased from the game starting point may be provided to the purchaser terminal 300. In other words, when a user of the purchaser terminal 300 touches a screen or clicks a mouse, the point is gradually decreased from the game starting point of 10,000 points. In this case, the game execution point is the point which is gradually decreased from the game starting point. The game execution point may not match with the game success criteria point or may not be within the game success criteria point range in one sequence. Therefore, when the user of the purchaser terminal 300 touches the screen or clicks the mouse, the point decreases again from the game execution point.

As a result, the controller 120 determines the price negotiation game as a success when the game execution point matches with the game success criteria point or is within the game success criteria point range.

Otherwise, the controller 120 determines the price negotiation game as a failure when the game execution point is smaller than the game success criteria point or smaller than the lower limit point of the game success criteria point range. In other words, this signifies that every time the user of the purchaser terminal 300 touches the screen or clicks the mouse, the game execution point is gradually decreased, however, the game success criteria point is passed by or the point passes by the game success criteria point and is not included in the game success criteria point range.

When the price negotiation game is determined as a success will be described again. According to an embodiment of the present specification, when the controller 120 determines the price negotiation game as a success, the controller provides the price discount coupon of a preset discount amount or executes again the price negotiation game with the purchaser terminal 300 for obtaining the price discount coupon capable of discounting more than the price discount coupon of the preset amount by a selection signal received from the purchaser terminal 300. When the controller 120 determines the price negotiation game as a success, the controller 120 may provide the price discount coupon of the preset amount to the purchaser terminal 300. In this case, the user of the purchaser terminal 300 may select the price discount coupon and end the price negotiation game. Otherwise, the user of the purchaser terminal 300 may not receive the price discount coupon and attempt the price negotiation game again. When the price negotiation game is reattempted and determined a success, the user obtains the price discount coupon capable of discounting more than the price discount coupon received when the prior game is determined a success.

In other words, the price negotiation game may become a stepwise game providing the price discount coupon having an increased discount rate whenever the price negotiation game is determined as a success, In this case, when the controller 120 receives the price discount request signal with respect to the product stored in the memory unit 130 from the purchaser terminal 300 through the communication unit 110, the controller 120 may provide the discount rate of the price discount coupon provided in each step to the purchaser terminal 300. Accordingly, the user of the purchaser terminal 300 may predict the discount benefit which may be received whenever the game of the user is determined as a success, and, in some cases, the possibility of purchasing the product for free is provided, thereby stimulating the purchasing desire of the purchaser.

According to an embodiment of the present specification, when the controller 120 receives the price discount request signal with respect to the product stored in the memory unit 130 from the purchaser terminal 300 through the communication unit 110, the controller 120 sets the product selling price included in the product information as the game starting point, and provides the game success criteria point of each step or the game success criteria point range of each step to the purchaser terminal 300. In this case, the game success criteria point or the game success criteria point range of each step may be set such that success becomes more difficult as the steps are progressed.

Meanwhile, when the controller 120 determines the price negotiation game as a failure, the controller 120 may retrieve all of the price discount coupons previously provided and end the game. Otherwise, when the controller 120 determines the price negotiation game as a failure, the controller 120 may provide the coupon obtained last among the price discount coupons previously provided and end the game. Meanwhile, when the controller 120 determines the price negotiation game as a failure, the controller 120 may provide any one of the price discount coupons previously provided and end the game.

The scheme for gradually decreasing the point from the game execution point among the game execution scheme will be examined again. In the price negotiation game according to the present specification, the quantity of points to subtract from the previous game execution point may be important. Therefore, the quantity of points are to be subtracted whenever the game execution signal is received from the purchaser terminal 300 may be set in a variety of ways.

According to an embodiment of the present specification, the subtracted point may be randomly selected within a preset range based on the product selling price whenever the game execution signal is received from the purchaser terminal 300. The preset range may be set in a variety of ways and in a stepwise range, for example, 0.1% to 10%, 0.5% to 15%, 10% to 20%, 10% to 30%, etc. (Units may naturally be converted to points) In addition, the controller 120 may calculate the game execution point by subtracting the subtraction point from the game starting point or the previous game execution point, and provide the calculated game execution point to the purchaser terminal 300.

According to another embodiment of the present specification, the controller 120 may select at least two subtraction points within the preset range based on the product selling price whenever the game execution signal is received from the purchaser terminal 300. In addition, the controller 120 may randomly or sequentially display the two or more subtracted point on a screen of the purchaser terminal 300 by a preset speed. In addition, when the controller 120 receives a selection signal from the purchaser terminal 300, the controller 120 subtracts the subtraction point displayed on the purchaser terminal 300 from the game starting point or the previous game execution point, and provides the calculated game execution point to the purchaser terminal 300. In other words, the two or more subtraction points may be displayed on the screen of the purchaser terminal 300 in a similar scheme as the screen of a slot machine. In addition, when the user of the purchaser terminal 300 touches the screen or clicks the mouse, the game may be executed by the selected subtraction point.

Meanwhile, in the case of executing the price negotiation game again by the user after the game is determined as a success will be examined.

According to an embodiment of the present specification, when the price negotiation game is executed again by the selection signal received from the purchaser terminal 300, the controller 120 may execute the price negotiation game with the purchaser terminal 300 after a preset delay time. The preset delay time may be set in a variety of ways such as 5 seconds, 10 seconds, 15 seconds, 30 seconds, 1 minute, etc.

According to another embodiment of the present specification, when the price negotiation game is executed again by the selection signal received from the purchaser terminal 300, the controller 120 may provide a preset advertisement to the purchaser terminal. In addition, the controller 120 may execute the price negotiation game with the purchaser terminal 300 after the advertisement is completely viewed. Through the configuration described above, an operator of the apparatus 100 for providing an online market service according to the present specification may obtain additional profits from the advertiser and the advertiser may obtain the opportunity for advertising the product or the service of the advertiser.

According to another embodiment of the present specification, when the price negotiation game is executed again by the selection signal received from the purchaser terminal 300, the controller 120 may execute the price negotiation game with the purchaser terminal 300 without the standby time by a preset item using signal from the purchaser terminal 300. Through the configuration described above, the operator of the apparatus 100 for providing an online market service according to the present specification may expect additional profits by selling an item. In addition, the user of the purchaser terminal 300 may start the price negotiation game without the standby time through using the item, so the user may execute the game faster than other purchasers.

Meanwhile, the starting part of the price negotiation game, in other words, when the price discount request signal with respect to the product stored in the memory unit 130 is received from the purchaser terminal 300 through the communication unit 110, will be examined again.

According to an embodiment of the present specification, when the controller 120 receives the price discount request signal with respect to the product stored in the memory unit 130 from the purchaser terminal 300 through the communication unit 110, the controller 120 may provide the preset advertisement to the purchaser terminal 300. In addition, the controller 120 may execute the price negotiation game with the purchaser terminal 300 after the advertisement is completely viewed. Through the configuration described above, an operator of the apparatus 100 for providing an online market service according to the present specification may obtain additional profits from the advertiser and the advertiser may obtain the opportunity for advertising the product or the service of the advertiser.

According to another embodiment of the present specification, when the controller 120 receives the preset item using signal from the purchaser terminal 300, the controller 120 may execute the price negotiation game with the purchaser terminal 300. Through the configuration described above, the operator of the apparatus 100 for providing an online market service according to the present specification may expect additional profits by selling an item. In addition, the user of the purchaser terminal 300 may start the price negotiation game through using the item, so the user may obtain the opportunity to purchase the product at a price discounted from the selling price.

Meanwhile, according to an embodiment of the present specification, in the memory unit 130, the starting time of the price negotiation game with respect to the product may be further stored. In this case, the controller 120 may execute the price negotiation game with the purchaser terminal 300, which received the price discount request signal after the starting time. The starting time may be set by the seller terminal 200 or the advertiser terminal 400. Through the configuration described above, when the sale is attempted by the specified price for a predetermined time and the product is not sold at the specified price, the sale may be attempted by a scheme stimulating the purchasing desire through the opportunity of price discounts.

In addition, in the memory unit 130, the termination time of the price negotiation game with respect to the product may be further stored. In this case, the controller 120 may execute the price negotiation game with the purchaser terminal 300, which received the price discount request signal until the termination time.

Meanwhile, the price negotiation game is not limited to being executed with the purchaser terminal 300 of one person with respect to a specific product. In other words, the price negotiation game may be simultaneously executed with two or more purchaser terminals 300. In this case, when all of the two or more purchaser terminals 300 succeed in the game, to which purchaser terminal 300 is the product to be sold needs to be determined.

According to an embodiment of the present specification, when the controller 120 executes the price negotiation game with two or more purchaser terminals, the product may be sold to the purchaser terminal 300, which succeeds in the price negotiation game and is the first purchaser terminal to transmit the signal for selecting the price discount coupon. In other words, the product is sold to the purchaser terminal 300 which succeeds first in the game among the two or more purchaser terminals 300. When the purchaser terminal 300, which succeeds in the game first among the two or more purchaser terminals 300, attempts the game for obtaining the coupon having a higher discount rate, the price negotiation game is regarded as not ended. The purchaser terminal 300, which succeeds the price negotiation game and is the first purchaser terminal to transmit the signal for purchasing the product, may be determined as the purchaser terminal 300 ultimately succeeding first in the game.

Meanwhile, the number of the product may be two or more. In other words, the product information stored in the memory unit 130 may further include information regarding the number of products. In this case, when all of the products are sold, the controller 120 may end the price negotiation game. In other words, when the product is sequentially sold to the purchaser terminal 300 succeeding first in the game among the purchaser terminals 300 and all of the products are completely sold, the execution of the price negotiation game may be ended. In this case, the controller 120 may control the transmission of a signal for notifying the termination of the game since all of the products are sold to the purchaser terminal 300 participating in the current game. In addition, the controller 120 may control the transmission of information with respect to the remaining number of products to the purchaser terminal 300 participating in the game.

Hereinafter, a method of providing an online market service by using the apparatus 100 for providing an online market service will be described. However, for describing the method of providing an online market service according to the present specification, repetitive descriptions will be omitted since each configuration of the apparatus 100 for providing an online market service has been described.

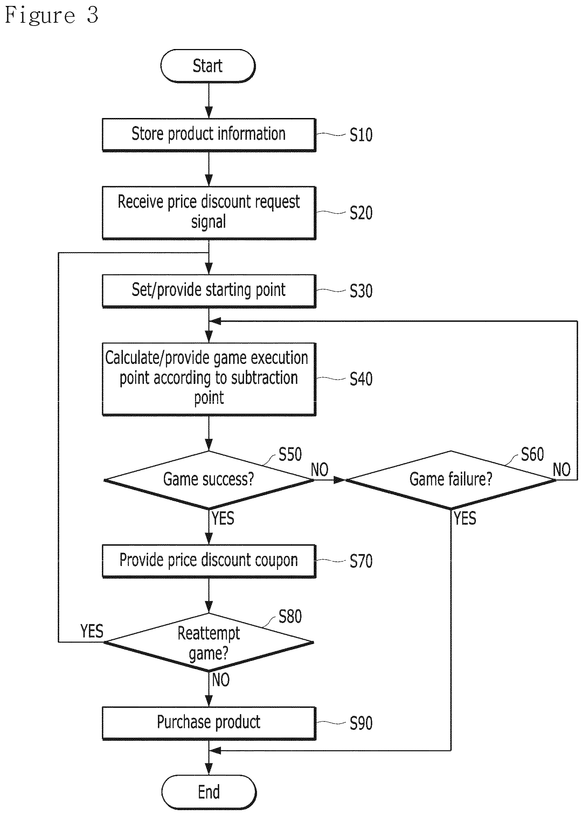

FIG. 3 is a flow chart schematically showing a method of providing an online market service according to the present specification.

Referring to FIG. 3, first, in step S10, the controller 120 may store the product information received from the seller terminal 200 through the communication unit 110, which is connected to the communication network 500 to transceive data. The controller 120 completes the process in step S10 and executes step S20.

In step S20, the controller 120 may receive the price discount request signal with respect to the stored product from the purchaser terminal 300 through the communication unit 110. The controller 120 completes the process in step S20 and executes step S30.

In the steps S30 to S90, the controller 120 may execute the price negotiation game for obtaining the coupon (hereinafter, price discount coupon), which is used for discounting the price of the product, with the purchaser terminal.

In step 30, the controller 120 may set the product selling price included in the product information as the game starting point. In addition, the controller 120 may provide the game success criteria point or the game success criteria point range associated with the product selling price to the purchaser terminal 300. The controller 120 completes the process in step S30 and executes step S40.

In step S40, every time the controller 120 receives a game execution signal from the purchaser terminal 300, the point (hereinafter, game execution point) sequentially decreased from the game starting point may be provided to the purchaser terminal 300. The method of calculating and selecting the point subtracted from the game execution point has been described in detail, so repetitive descriptions are omitted. The controller 120 completes the process in step S40 and executes step S50.

In step S50, the controller 120 may determine when the game is a success based on the game execution point. When the game is not determined as a success (NO in S50), step S60 is executed. In this case, the controller 120 may determine whether the game is a failure in step S60. When the game is not determined as a failure (NO in S60), the controller 120 executes step S40. Therefore, the controller 120 may execute the game while repetitively executing steps S40 to S60. Otherwise, when the game is determined as a failure (YES in S60), the controller 120 ends the process. Meanwhile, when the game is determined as a success (YES in S50), the controller 120 executes step S70.

In step S70, the controller 120 may provide the price discount coupon of a preset price amount to the purchaser terminal. The controller 120 completes the process in step S70 and executes step S80.

In step S80, the controller 120 may receive a signal from the purchaser terminal 300 and determine whether to reattempt the game. When the signal received from the purchaser terminal 300 is a game reattempt signal (YES in S80), the controller 120 executes step S30. Therefore, the controller 120 may execute the price negotiation game again through steps S30 to S80. In this case, the coupon provided in step S70 may have a discount rate higher than the coupon obtained in the previous game success time point. Otherwise, when the signal received from the purchaser terminal 300 is not a game reattempt signal (NO in S80), the controller 120 executes step S90.

In step S90, the controller 120 sells the product to the purchaser terminal 300 and ends the process.

To execute the described calculation and various control logics, the controller 120 may include processors, ASICs (application-specific integrated circuit), other chipsets, logic circuits, registers, communication modems, data processing devices, etc. well known in the art. In addition, when the control logic is implemented as a software, the controller 120 may be implemented as a set of program modules. In this case, the program module may be stored in the memory unit 130 and executed by the processor.

According to the present specification, the benefit of the price discount may be provided to the purchaser. In addition, a seller can stimulate purchasing desires to more persons through providing the benefit of the price discount. In addition, through the structure of requiring the user to view the advertisement for executing the price negotiation game, profits may be created for the advertiser desiring to provide the advertisement. In addition, the advertiser can secure various methods for exposing the advertisement of the advertiser, thereby maximizing the advertisement effect. Further, when the seller registers the product, the sales scheme may be selected through the specified sales scheme or the price negotiation game, so the sales channel may be configured in a variety of ways. In addition, products registered by other persons can be sold on the exclusive shopping mall of the seller, so sellers without an initial product can also configure the shopping mall. Meanwhile, by combining the price negotiation scheme of an offline scheme with an online scheme, the online market may be made more active through inducing the price negotiation game of the purchaser.

It will be understood by those of ordinary skill in the art that various substitutions, changes in form and alterations may be made therein without departing from the spirit and the scope of the present specification. The described embodiments are completely for a description, and it should not be interpreted in any way to limit the scope of the present specification. The scope of the present specification is only defined by within the scope of the accompanying claims, and all various substitutions, changes in form and alterations derived from the meaning, scope and equivalents are within the scope of the present specification.

### Mode for Invention

The mode for invention is described as the best mode as described above.

### Industrial Applicability

The technology according to the present specification may be used in the overall online market.

## Claims

1. An apparatus for providing an online market service, the apparatus comprising:
a communication unit connected to a communication network to transceive data;
a memory unit to store product information received from a seller terminal through the communication unit; and
a controller to execute a price negotiation game for obtaining a coupon (hereinafter, 'price discount coupon'), which is used for discounting a price of a product, with a purchaser terminal when a price discount request signal with respect to the product stored in the memory unit is received from the seller terminal through the communication unit.

2. The apparatus of claim 1, wherein the controller sets a product selling price included in the product information as a game starting point, provides a game success criteria point or a game success criteria point range associated with the product selling price to the purchaser terminal, provides a point (hereinafter, 'game execution point') sequentially decreased from the game starting point to the purchaser terminal whenever the game execution signal is received from the purchaser terminal, and determines the price negotiation game as a success when the game execution point is the same as the game success criteria point or the game execution point is within the game success criteria point range.

3. The apparatus of claim 2, wherein the controller randomly selects the game success criteria point or the game success criteria point range within a preset range based on the product selling price.

4. The apparatus of claim 2, wherein the controller randomly selects a subtraction point within a preset range based on the product selling price whenever the game execution signal is received from the purchaser terminal, calculates the game execution point by subtracting the subtraction point from the game starting point or a previous game execution point, and provides the calculated game execution point to the purchaser terminal.

5. The apparatus of claim 2, wherein the controller selects two or more subtraction points within a preset range based on the product selling price whenever the game execution signal is received from the purchaser terminal, randomly or sequentially displays the two or more subtraction points on a screen of the purchaser terminal by a preset speed, calculates the game execution point by subtracting the subtraction point displayed on the purchaser terminal from the game starting point or a previous game execution point when a selection signal is received from the purchaser terminal, and provides the calculated game execution point to the purchaser terminal.

6. The apparatus of claim 2, wherein, when the price negotiation game is determined to be a success, the controller provides a discount coupon of a preset price discount amount to the purchaser terminal by a selection signal received from the purchaser terminal or repeats execution of the price negotiation game with the purchaser terminal for obtaining the price discount coupon having a price discount amount more than the preset price amount of the price discount coupon.

7. The apparatus of claim 6, wherein, when the price negotiation game is executed again by the selection signal received from the purchaser terminal, the controller executes the price negotiation game with the purchaser terminal after a preset standby time.

8. The apparatus of claim 6, wherein, when the price negotiation game is executed again by the selection signal received from the purchaser terminal, the controller provides a preset advertisement to the purchaser terminal, and executes the price negotiation game with the purchaser terminal after the advertisement is completely viewed.

9. The apparatus of claim 6, wherein, when the price negotiation game is repeated by the selection signal received from the purchaser terminal, the controller executes the price negotiation game with the purchaser terminal by a preset item using signal received from the purchaser terminal without a standby time.

10. The apparatus of claim 2, wherein, when the game execution point is smaller than the game success criteria point or smaller than a lower limit point of the game success criteria point range, the controller determines the price negotiation game as a failure.

11. The apparatus of claim 1, wherein the price negotiation game is a stepwise game for providing the price discount coupon, in which a discount rate is increased for each success, and, when a price discount request signal with respect to the product stored in the memory unit is received from the purchaser terminal through the communication unit, the controller provides discount rate information of the price discount coupon provided in each step.

12. The apparatus of claim 11, wherein, when a price discount request signal with respect to the product stored in the memory unit is received from the purchaser terminal through the communication unit, the controller sets a product selling price included in the product information as a game starting point, and provides a game success criteria point of each step or a game success criteria point range of each step associated with the product selling price to the purchaser terminal.

13. The apparatus of claim 1, wherein, when the price discount request signal with respect to the product stored in the memory unit is received from the purchaser terminal through the communication unit, the controller provides a preset advertisement to the purchaser terminal, and executes the price negotiation game with the purchaser terminal after the advertisement is completely viewed.

14. The apparatus of claim 1, wherein, when a preset item using signal is received from the purchaser terminal, the controller executes the price negotiation game with the purchaser terminal.

15. The apparatus of claim 1, wherein the memory unit further stores a starting time of the price negotiation game with respect to the product, and the controller executes the price negotiation game with the purchaser terminal, which received the price discount request signal, after the starting time.

16. The apparatus of claim 15, wherein the memory unit further stores a termination time of the price negotiation game with respect to the product, and the controller executes the price negotiation game with the purchaser terminal, which received the price discount request signal, until the termination time.

17. The apparatus of claim 6, wherein, when the price negotiation game is executed with two or more purchaser terminals, the controller sells the product to the purchaser terminal, which succeeds in the price negotiation game and transmits the price discount coupon first among the two or more purchaser terminals.

18. The apparatus of claim 17, wherein the product information stored in the memory unit further includes information regarding a number amount of the product, and the controller, when entire number amount of the products are sold, ends the execution of the price negotiation game.

19. The apparatus of claim 1, wherein, when a purchasing signal for purchasing the product stored in the memory unit is received from an advertiser terminal, the controller sets the product purchased by the advertiser terminal as a target product for the product negotiation game.

20. A method of providing an online market service, the method comprising:
(a) storing product information received from a seller terminal through a communication unit, which is connected to a communication network and transceives data;
(b) receiving a price discount request signal with respect to a stored product from a purchaser terminal through the communication unit; and
(c) executing a price negotiation game for obtaining a coupon, which is used for discounting a price of the product, with the purchaser terminal.
